(19) **Europäisches Patentamt / European Patent Office / Office européen des brevets**

(11) **EP 3 896 703 B1**

(12) **EUROPEAN PATENT SPECIFICATION**

(45) Date of publication and mention
of the grant of the patent:
**12.03.2025  Bulletin 2025/11**

(51) International Patent Classification (IPC):
**G21C 3/326** *(2006.01)*     **G21C 17/022** *(2006.01)*
**G21D 3/00** *(2006.01)*

(21) Application number: **20169335.5**

(22) Date of filing: **14.04.2020**

(52) Cooperative Patent Classification (CPC):
**G21D 3/001; G21C 3/326; G21C 17/022;**
Y02E 30/00; Y02E 30/30

(54) **METHOD OF PROVIDING BWR FUEL PELLETS COMPRISING DETERMINING U-235 ENRICHMENT LEVELS DETERMINED BY A COMPUTER-IMPLEMENTED SIMULATION SUCH THAT CRUD DEPOSITION DOES NOT OCCUR UNDER PRE-DETERMINED BOUNDARY CONDITIONS**

VERFAHREN ZUR BEREITSTELLUNG VON SWR-BRENNSTOFFPELLETS, DAS DIE BESTIMMUNG VON U-235-ANREICHERUNGSNIVEAUS UMFASST, DIE DURCH EINE COMPUTERIMPLEMENTIERTE SIMULATION SO BESTIMMT WERDEN, DASS UNTER VORBESTIMMTEN RANDBEDINGUNGEN KEINE ROHSTOFFABLAGERUNG AUFTRITT

MÉTHODE POUR FOURNIR DES PASTILLES DE COMBUSTIBLE REB COMPRENANT LA DÉTERMINATION DES NIVEAUX D'ENRICHISSEMENT EN U-235 DÉTERMINÉS PAR UNE SIMULATION MISE EN OEUVRE PAR ORDINATEUR, DE SORTE QUE LE DÉPÔT DE CRUD NE SE PRODUISE PAS DANS DES CONDITIONS LIMITES PRÉDÉTERMINÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.10.2021  Bulletin 2021/42**

(60) Divisional application:
**23178211.1 / 4 235 698**

(73) Proprietors:
• **Westinghouse Electric Sweden AB**
**721 63 Västerås (SE)**
• **ETH Zurich**
**8092 Zurich (CH)**

(72) Inventors:
• **LE CORRE, Jean-Marie**
**754 22 Uppsala (SE)**
• **PRASSER, Horst-Michael**
**5415 Nussbaumen (CH)**
• **ROBERS, Lukas**
**8633 Wolfhausen (CH)**

(74) Representative: **Bjerkén Hynell KB**
**P.O. Box 1061**
**101 39 Stockholm (SE)**

(56) References cited:
**EP-A1- 3 364 418**

• **SAXENA ABHISHEK ET AL: "A study of two-phase annular flow using unsteady numerical computations", INTERNATIONAL JOURNAL OF MULTIPHASE FLOW, ELSEVIER, AMSTERDAM, NL, vol. 126, 8 May 2019 (2019-05-08), XP086128222, ISSN: 0301-9322, [retrieved on 20190508], DOI: 10.1016/ J.IJMULTIPHASEFLOW.2019.05.003**
• **CARL ADAMSSON ET AL: "Modeling and validation of a mechanistic tool (MEFISTO) for the prediction of critical power in BWR fuel assemblies", NUCLEAR ENGINEERING AND DESIGN, vol. 241, no. 8, 1 August 2011 (2011-08-01), NL, pages 2843 - 2858, XP055719097, ISSN: 0029-5493, DOI: 10.1016/ j.nucengdes.2011.01.033**

# EP 3 896 703 B1

**Description**

<u>Technical field</u>

The present disclosure relates to methods for nuclear reactors, and specifically to Boiling Water Reactors (BWR), intended to characterize disturbance waves and base film in coolant water, and specifically to one method adapted to predict crud depositions of relatively high solubility compounds, such as $ZnO$ and $Zn_2SiO_4$, in fuel assemblies, in the annular two-phase flow regime, in particular when induced by transients such as inlet flow fluctuations in BWR fuel assemblies.

Relevant background technology is discussed in SAXENA ABHISHEK ET AL: "A study of two-phase annular flow using unsteady numerical computations", INTERNATIONAL JOURNAL OF MULTIPHASE FLOW, vol. 126, 8 May 2019, XP086128222, ISSN: 0301-9322, DOI: 10.1016/J.IJMULTIPHASEFLOW.2019.05 003, and in CARL ADAMSSON ET AL: "Modeling and validation of a mechanistic tool (MEFISTO) for the prediction of critical power in BWR fuel assemblies",NUCLEAR ENGINEERING AND DESIGN, vol. 241, no. 8, 1 August 2011, pages 2843-2858, XP055719097, ISSN: 0029-5493, DOI: 10.1016/ j.nucengdes.2011.01.033.

<u>Background</u>

In the upper level of fuel assemblies in BWRs, very dense crud deposits have been recently observed. Crud is a colloquial term for corrosion and wear products (rust particles, etc.) where part of it becomes radioactive (i.e. activated) when exposed to radiation. Mechanisms leading to crud deposition can also potentially lead to fuel performance issues such as spalling, reduced thermal conductivity and even fuel failures and this hence can become a safety concern. The dense crud deposits in the upper level of fuel assemblies were observed in specific fuel assembly locations, and there was no previous experience of this dense crud in earlier cycles or in other, similar, plants.

Thus, the object of the present invention is to achieve a method of simulating and predicting impurity concentration in the annular two-phase flow regime and margin to associated crud deposition threshold in BWR fuel assemblies and to provide fuel pellets having enrichment levels determined in dependence of the result of the simulation method in order to avoid crud.

<u>Summary</u>

The above-mentioned object is achieved by the present invention according to the independent claim.
Preferred embodiments are set forth in the dependent claims.

<u>Brief description of the drawings</u>

    Figure 1 is a schematic illustration of a cross-section steam/liquid annular two-phase flow along a fuel rod.
    Figure 2 is a schematic illustration of a cross-section steam/liquid annular two-phase flow along a fuel rod illustrating some aspects of the present invention.
    Figure 3 is a schematic perspective view of a fuel assembly where the method according to the present invention is applied.
    Figure 4 is a schematic cross-sectional view of a fuel assembly, which include the representation of various sub-channels.
    Figures 5 and 6 show graphs illustrating results of the local instantaneous impurity concentration simulation.
    Figure 7 is a flow diagram illustrating a method according to the present invention.
    Figure 8 is a flow diagram illustrating a method according to a second aspect, which is not part of the present invention.

<u>Detailed description</u>

The computer-based simulation method will now be described in detail with references to the appended figures. Throughout the figures the same, or similar, items have the same reference signs. Moreover, the items and the figures are not necessarily to scale, emphasis instead being placed upon illustrating the principles of the invention.
Initially, a background of available calculation tools and models will be given.
Modelling and validation of two-phase with three-field sub-channel analysis codes (e.g. MEFISTO-T) for the prediction of two-phase flow, up to critical power where so-called dryout occurs, in BWR fuel assemblies is previously known, and publicly available, and has been developed and applied by the applicant.

Westinghouse has developed the MEFISTO-T code with the main goal to achieve fast, robust, practical and reliable predictions of steady-state and transient dryout power in Boiling Water Reactor (BWR) fuel assemblies based on a mechanistic approach. A computationally efficient simulation scheme is used to achieve this goal, where the code resolves all relevant field (drop, steam and multi-film) mass balance equations, within the annular flow region, at the sub-channel level while relying on a fast and robust two-phase (liquid/steam) sub-channel solution to provide the cross-flow information. The MEFISTO-T code can hence provide highly detailed solutions of the multi-film flow in BWR fuel assemblies while enhancing flexibility and reducing the computer time by an order of magnitude as compared to a standard three-field sub-channel analysis approach. Models for the numerical computation of the one-dimensional field flowrate distributions in an open channel (i.e. a sub-channel), including the numerical treatment of field cross-flows, part-length rods, spacers grids and post-dryout conditions are included in the code. The MEFISTO-T code is then applied to dryout predictions in BWR fuel assemblies using the VIPRE-W code as a fast and robust two-phase sub-channel driver code. The dryout power is numerically predicted by iterating on the assembly power so that the minimum film flowrate in the assembly reaches the predetermined dryout criteria. Predicted dryout powers (including trends with flow, pressure, inlet subcooling conditions and power distribution) and predicted dryout locations (both axial and radial) are compared to experimental results, using available dryout databases, and are shown to yield excellent results.

The MEFISTO-T code applied to dryout predications is discussed e.g. in "Modeling and validation of a mechanistic tool (MEFISTO) for the prediction of critical power in BWR fuel assemblies" by Adamsson, Carl; Le Corre, Jean-Marie, published 2011 in "Nuclear Engineering and Design"; ISSN 0029-5493; Worldcat; CODEN NEDEAU; v. 241(8); p. 2843-2858.

The MEFISTO-T code is based on a simplified approach to sub-channel film-flow analysis whereby the sub-channel transport equations for the liquid films are decoupled from each other. The approach allows fast and robust simulation with high axial resolution of BWR steady-state operation and realistic transients. The code has been successfully validated against experimental data under both steady state conditions and transient conditions involving realistic variations of flow and power and three different axial power distributions, at conditions typical during BWR operation.

Semi-empirical dryout correlations are commonly used to predict the dryout power in BWR fuel rod assemblies under both steady-state and transient conditions. Even though these correlations can be based on mechanistic features, they are still essentially empirical and require the use of an extensive and fuel-specific critical power database to be developed. By contrast, mechanistic methods based on sub-channel annular two-phase flow modelling, such as in MEFISTO-T code, have the potential for accurate dryout prediction capabilities outside the correlation development database.

To summarize, MEFISTO-T is a sub-channel analysis code developed at Westinghouse with the main purpose to predict film flow distributions on every fuel rod during steady-state and transient operations. The code is based on a one-dimensional three-field approach where liquid film, liquid droplets and vapour are considered in every sub-channel. MEFISTO-T relies on a simplified two-phase flow model (VIPREW) to calculate the time-dependent distribution of flow and enthalpy in every sub-channel, before applying the three-field approach from onset of annular flow to assembly outlet, in all or selected sub-channels.

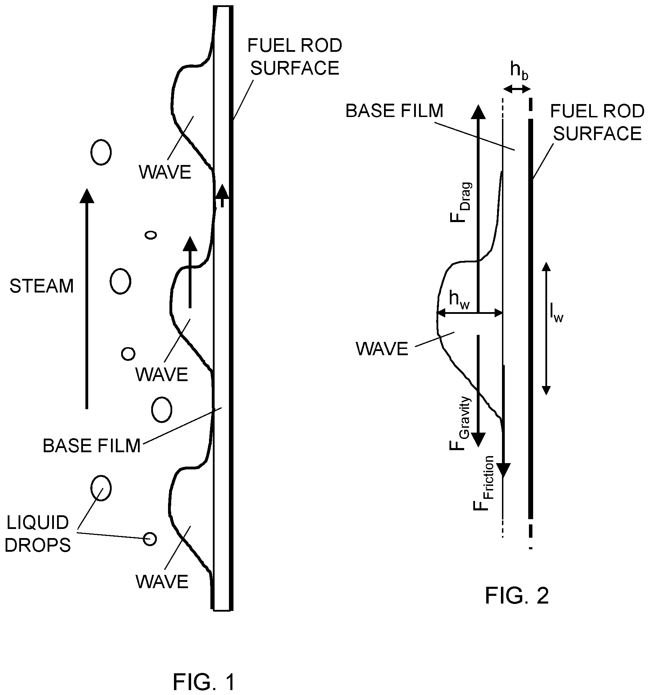

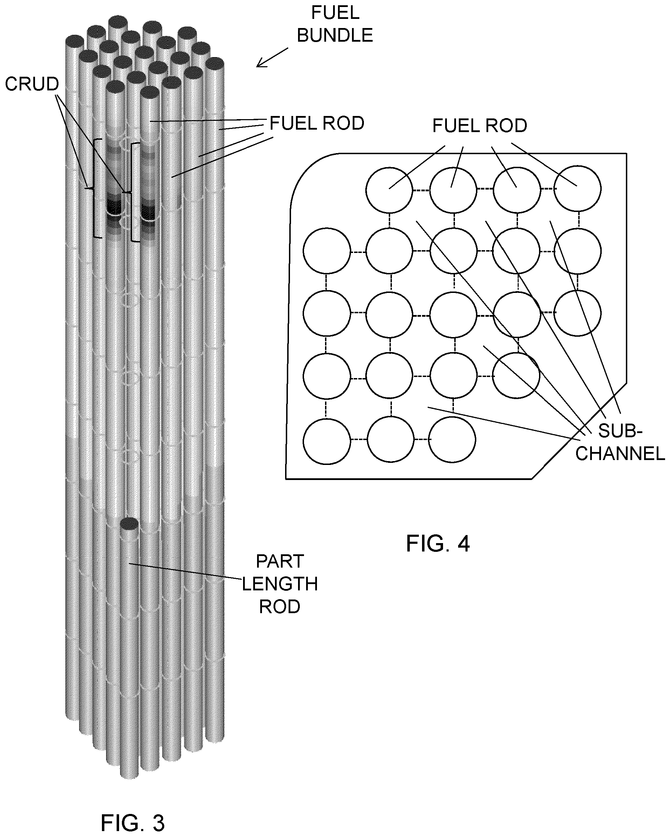

Generally, the simulation methods disclosed herein comprise extending the three-field approach to a four-field approach, wherein the liquid film on each fuel rod in the four-field approach is divided into fast moving disturbance waves on top of slowly moving liquid base films. This is schematically illustrated in figures 1 and 2. The simulation methods are based upon a sub-channel mechanistic model using a transient three-field (steam, liquid drops, liquid film) approach including couplings between sub-channels defined between said fuel rods. This mechanistic model is e.g. the above-discussed MEFISTO-T code. A cross-sectional view of a fuel assembly is shown in figure 4 where some of the sub-channels are indicated.

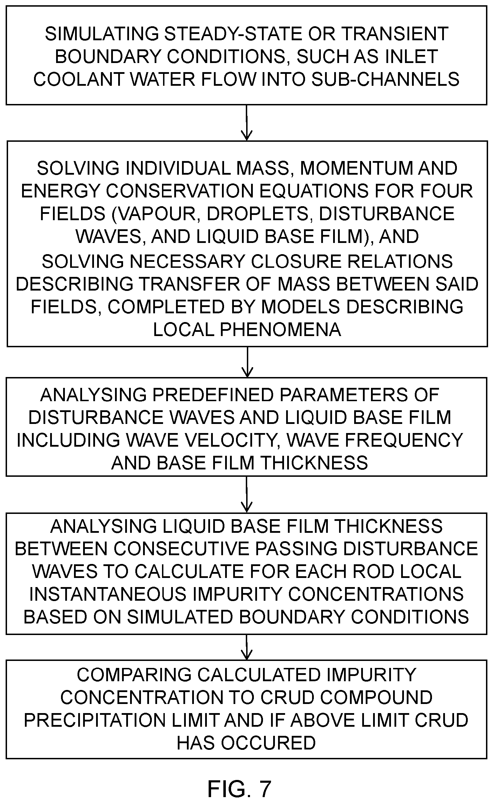

The present invention relates to a computer-implemented simulation method of predicting local concentrations of constituents in coolant water anywhere along fuel rods within any fuel assembly mechanical design of a Boiling Water Reactor (BWR) potentially resulting in crud deposits on said fuel rods. The method will now be described in detail, and in particular with references to the flow diagram shown in figure 7.

The method is based on a sub-channel approach of predicting local mass fluxes of vapour and liquid in coolant water anywhere along fuel rods within any fuel assembly mechanical design of a Boiling Water Reactor (BWR) for given steady-state or transient boundary conditions. The sub-channel approach is based on the solution of mass, momentum and energy conservation equations for the vapour phase and the liquid phase, where the liquid phase is represented by more than one field variable, and is specifically represented by three fields, with the vapour phase as a fourth field, consisting of droplets, a liquid base film, and disturbance waves.

The method comprises solving individual mass, momentum and energy conservation equations, for the four fields, and solving the necessary closure relations describing the transfer of mass between the said fields, completed by mass conservation equations for constituents dissolved in the liquid phase and transported by each of the said fields individually.

The method comprises:

- Simulating steady-state or transient boundary conditions for the condition of interest to the fuel assembly, such as inlet coolant water flow into said sub-channels (the coolant water flow may have a predetermined flow velocity variation), temperature, pressure, rod power distribution, and assembly power.
- Analysing predefined parameters of said disturbance waves and base film, including wave velocity and frequency, base film thickness, etc. based upon the interaction between the disturbance waves, the liquid base film, the liquid drops and the vapor.
- Analysing liquid base film thickness between consecutive passing disturbance waves, to calculate local instantaneous impurity concentrations based on said simulated boundary conditions.

The calculation is made for each fuel rod of the fuel assembly and includes thermal-hydraulics couplings between sub-channels. For each fuel rod, the method further comprises comparing said calculated local instantaneous impurity concentration to a crud compound precipitation limit, and during the time said concentration is higher than said precipitation limit, crud is considered to have occurred.

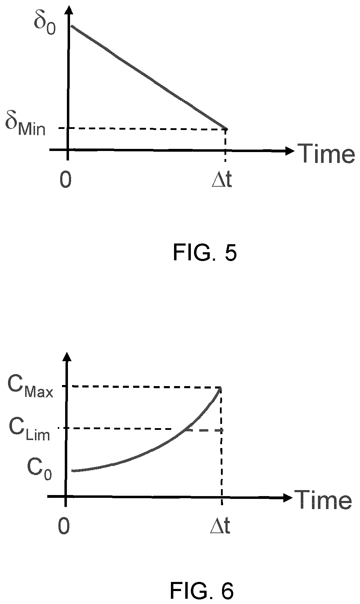

Figure 6 shows a graph illustrating how impurity concentration varies between passing disturbance waves.

Figure 3 illustrates a fuel assembly comprising fuel rods. In the figure is indicated portions of two fuel rods where high impurity concentration has been identified. The different grey colours indicate how much impurity concentration is present, where black indicates highest concentration. In the figure, a so-called part length rod is also indicated.

According to one embodiment, the method step of analysing predefined parameters of disturbance waves includes resolving the mass and momentum conservation equations in every considered sub-channels using a four-field approach where the waves and base films are considered separately (also referred as disturbance wave model). This model is coupled to a sub-channel analysis code for the crossflow calculations and some elements of the momentum balance (such as pressure gradient and inertia terms) may be neglected.

According to another embodiment, the method comprises applying impurity mass conservation equations consistent with the four-field conservation equations mentioned above. Based upon the interaction between the waves and liquid base film, the model calculates a detailed distribution of impurity concentrations axially and azimuthally (i.e. along the perimeter of a given fuel rod) within each liquid base film flowing along the fuel rods of the fuel assembly under operating conditions of interest.

According to still another embodiment, the method further comprises applying a local instantaneous impurity concentration model, which is used as a post-process of the base film impurity concentration model, and, for each fuel rod, being configured to calculate said local instantaneous impurity concentration within the slowly moving liquid base film in between disturbance waves during nominal operation and any transients, such as predetermined inlet flow velocity variations.

According to the invention, the method further comprises simulating operating conditions of interest by varying the fissile material content (the $^{235}$U enrichment) of one or several fuel pellets of one or several fuel rods in dependence of the calculated local instantaneous impurity concentration in order to prevent the formation of crud deposits.

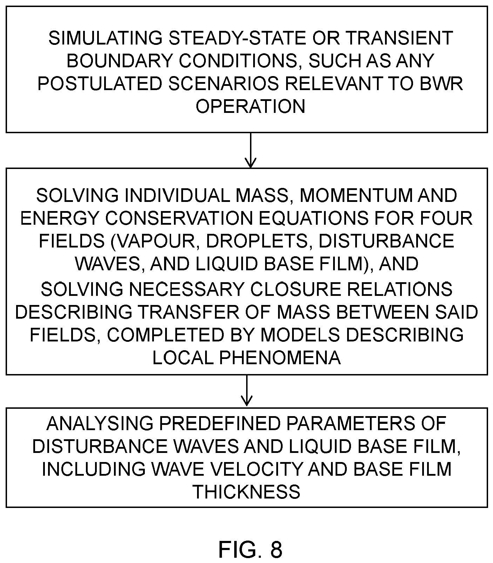

Herein is also disclosed a second computer-implemented simulation method, which is not part of the present invention, and which is schematically illustrated by the flow diagram shown in figure 8.

The second simulation method is based on a sub-channel approach of predicting local mass fluxes of vapour and liquid in coolant water anywhere along fuel rods within any fuel assembly mechanical design of a Boiling Water Reactor (BWR) for given steady-state or transient boundary conditions. The sub-channel approach is based on the solution of mass, momentum and energy conservation equations for the vapour phase and the liquid phase, the liquid phase is represented by more than one field variable, and is specifically represented by three fields, with the vapour phase as a fourth field, consisting of droplets, a liquid base film, and disturbance waves.

The method comprises solving individual mass, momentum and energy conservation equations, for said four fields, and solving the necessary closure relations describing the transfer of mass between the said fields, completed by models describing local phenomena. The method further comprises:

- Simulating steady-state or transient boundary conditions, such as any postulated scenarios relevant to BWR operation.
- Analysing predefined parameters of said disturbance waves and liquid base film, including wave velocity and frequency, and base film thickness.

In one embodiment, the method step of analysing predefined parameters comprises analysing liquid base film between consecutive passing disturbance waves, to calculate, for each fuel rod of the fuel assembly, local instantaneous dry patch formation and associated clad temperature increase in between disturbance waves during said simulated steady-state or transient operations.

In another embodiment, the method step of analysing predefined parameters comprises analysing liquid disturbance wave characteristics, to calculate, for each fuel rod of the fuel assembly, droplet entrainment from the waves during said simulated steady-state or transient operations.

According to still another embodiment, in case of simulating transient boundary conditions, the boundary conditions include input parameters having predetermined temporal variations.

Preferably, the local phenomena are base film dryout, clad temperature increase, and/or drop entrainment from waves.

Thus, the second simulation method could be applied to any steady-state, transients and postulated scenarios relevant to BWR operation with respect to the potential appearance and rewetting of dry patches (between waves), associated dry time and clad temperature increase. The appearance of dry patches is derived from a local, instantaneous, consideration of the liquid base film during the time between two consecutive disturbance waves, including exchange terms with the steam and drop fields. In addition, the second method could be further extended to calculate the amount of droplet entrained from the liquid film. The droplet entrainment is closely related to the wave characteristics and can be calculated from the consideration of wave geometrical dimensions, mass and momentum derived from the four-field approach.

The present disclosure also relates to a Boiling Water Reactor (BWR) comprising fuel assemblies including fuel rods provided with fuel pellets having a $^{235}$U enrichment level. The enrichment level is determined in dependence of the result of simulations performed by the above described simulation methods.

For example, the simulation method may be applied to determine enrichment levels required to make the next-to-corner rods equally susceptible to crud deposition as all other rods in the fuel assembly.

By generally applying the present invention, a $^{235}$U optimization, involving the local concentration of crud constituents, may be reached in the nuclear design process, in a similar manner as already existing design criteria.

As discussed above, the present invention is based upon new advanced features and is implemented by two newly-developed models, a disturbance wave model, and an impurity concentration model.

The disturbance wave model applies a 1D, two-phase, four-field approach. The fields of a commonly applied three-field approach comprise steam, liquid droplets, and a liquid film. In the four-field approach, the liquid film is further divided into liquid disturbance waves and a liquid base film. Thus, the four fields are steam, liquid droplets, liquid disturbance waves and a liquid base film. This is schematically illustrated in figure 1.

Because of the mass, momentum and energy exchanges between disturbance waves and base film, there is a need for new constitutive models and field exchange terms.

The impurity concentration model is calculated in all considered fields by applying additional impurity conservation equations for all fields. This is similar to the mass conservation equations already utilized in the sub-channel code, but with different exchanges between fields (since impurities are not transported to the steam field).

These newly developed models will now be discussed more in detail.

The disturbance wave model is based upon the following assumptions and is illustrated by figure 2.

The four fields comprise very fast moving steam, liquid droplets, fast moving waves that tend to be coherent and transport most of the film mass, and a slow moving liquid base film that is very thin and contributes much less to the liquid film mass transport.

Transient field conservation equations are resolved, and below is one example of a liquid film momentum balance equation in a three-field approach:

$$\frac{\partial}{\partial t} W_f + \frac{\partial}{\partial z}\left(u_f W_f\right) =$$

$$\Pi\left(u_d D - u_f E - u_f \Gamma\right) + u_f w_f - \Pi h_f \left(\frac{\partial p}{\partial z} + g\rho_l\right) + \Pi(\tau_v - \tau_{wall})$$

The left-hand side of the equation represents the inertia terms and the right-hand side of the equation represents (in order), the momentum transported by drop deposition, entrainment, evaporation and crossflow, the pressure gradient, the gravity and the interfacial forces (from vapour and wall).

Following the same approach in the new four-field formulation, with reference to figure 2, where various parameters are shown, it is possible to establish an equation representing wave momentum conservation and base film momentum conservation. The wave momentum conservation is written below:

$$\frac{\partial}{\partial t} W_w + \frac{\partial}{\partial z} (u_w W_w)$$

$$= \Pi (u_d D_w - u_w E - u_w \Psi_w + u_b \Psi_b) + u_w w_w - \Pi h_w \left( \frac{\partial p}{\partial z} + g \rho_l \right)$$

$$+ \Pi \left( \tau_{v/w} - \tau_{w/b} \right)$$

In practice, some simplifications can be made whenever justified. For instance, in the specific case where steam/drop/wave/base film momentum transfer from mass exchanges, pressure gradient and inertia terms can be neglected, we get:

$$h_w g \rho_l + \left( \tau_{v/w} - \tau_{w/b} \right) = 0$$

Below is a list showing what the parameters of the above equations stand for:

W: Mass flowrate
w: Mass flowrate in crossflow
u: Velocity
D: Drop deposition mass flux (to film)
E: Drop entrainment mass flux (from film)
Γ: Evaporation mass flux (from film)
Ψ: Wave/base film mass flux
Π: Wall perimeter
p: Pressure
ρ: Density
h: Thickness
τ: Interfacial force (per unit area)
t: Time
z: Axial elevation

Subscripts:

w: wave
f: film
d: drop
l: liquid
v: vapor
b: base film

In figure 2, the resulting forces on the waves are schematically indicated by arrows in the simple case depicted by the previous equation. A force balance is achieved by gravity forces, steam drag and wave to base film momentum transfer ("friction").

$$F_{Gravity} + F_{Drag} + F_{Friction} = 0$$

which is solved with regard to wave velocity.

In order to complete the system of equations, it is required to have constitutive models, e.g. for the interfacial forces between fields in particular: wave drag force, and the wave to base film force. These constitutive modes can be based on physical considerations or empirical correlations (when a suitable experimental database is available).

Additional inputs are also required to sufficiently describe the average wave and base film geometrical characteristics locally. While the choices may differ depending on the method, these inputs would typically include the wave amplitude ($h_w$), width ($l_w$), and base liquid film thickness ($h_b$). These may also be obtained by physical considerations and/or calibrated empirical correlations (when a suitable experimental database is available).

The equations are then solved for wave mass flow and wave velocities. The wave frequency is determined from consistency with the wave mass and momentum conservation equations.

Below is shown four examples of calibrated empirical correlations. Different correlations may be developed as more relevant data becomes available. These are determined by using data from publicly available experimental databases at relevant BWR core conditions. The correlations were derived using regression analysis, specifically performed for the four-field model. Regression analysis is a powerful statistical method that allows to examine the relationship between two or more variables of interest. While there are many types of regression analysis, at their core they all examine the influence of one or more independent variables on a dependent variable.

Equilibrium base film thickness:

$$\frac{h_b}{d_H} = 5.37 \cdot 10^{-5} \cdot Re_v^{-0.64} \cdot Re_f^{1.21}$$

Wave amplitude:

$$\frac{h_w}{d_H} = 3.21 \cdot 10^{-3} \cdot Re_v^{-0.86} \cdot Re_w^{1.35}$$

Wave width:

$$\frac{l_w}{d_H} = (5.20 \cdot 10^5 / Re_v)^{0.63}$$

Wave drag coefficient:

$$C_w = \left(\frac{1.73 \cdot 10^5}{Re_{vw}}\right)^2 + 0.22$$

Below is a list showing what the parameters of the above equations stand for:

$h_b$: Base film thickness
$h_w$: Wave amplitude
$l_w$: Wave (axial) width
$C_w$: Wave drag coefficient
$d_H$: Equivalent hydraulic diameter (4A/P)
$d_A$: Equivalent circular area diameter (sqrt(4A/$\pi$)
$Re_v$: Vapor Reynolds number ($\rho_v$*$u_v$*dA/$\mu_v$)
$Re_{vw}$: Vapor Reynolds number with respect to wave velocity ($\rho_v$*($u_v$-$u_w$)*dA/$\mu_v$)
$Re_f$: Film Reynolds number (4*$M_f$/$\Pi$/$\mu_f$)
$Re_w$: Wave Reynolds number (4*$M_w$/$\Pi$/$\mu_f$)

The Reynolds number (Re) is an important dimensionless quantity in fluid mechanics typically used to help predict flow patterns in different fluid flow situations. At low Reynolds numbers, flows tend to be dominated by laminar (sheet-like) flow, while at high Reynolds numbers turbulence results from differences in the speed and direction of the fluid.

Because the calibrated correlations were derived from data under equilibrium conditions (thermal and mechanical), model relaxations are applied in the model to allow the geometrical characteristics of the waves to smoothly transition from one state to the other. The relaxations characterizes the rate at which the wave can exchange mass with the base film and the rate at which the wave characteristics can change, consistent with experimental observations.

The model is implemented in MEFISTO-T and the wave and base film geometrical characteristic correlations are calibrated against the RISO database. It has been tested for simple flow transients such as Fukano transients.

The RISO database is a publicly available high-pressure steam/water database made available by the Department of Reactor Technology at the Riso National laboratory, Denmark, in 1978.

Würtz, J. (1978). An experimental and theoretical investigation of annular steam-water flow in tubes and annuli at 30 to 90 bar. (Denmark. Forskningscenter Risoe. Risoe-R; No. 372).

Measurements were presented of film flow rates, pressure gradients, film thicknesses, wave frequencies and velocities, and burnout (dryout) heat fluxes in one annular and two tubular geometries. The more than 250 experiments were performed with steam-water at 30 to 90 bar under both adiabatic and diabatic conditions.

The transient experimental experiments performed by Fukano are available in T. Fukano, S. Mori, T. Nakagawa (2003). Fluctuation characteristics of heating surface temperature near an obstacle in transient boiling two-phase flow in a vertical annular channel. Nuclear Engineering and Design 219 (2003) 47-60.

In these low-pressure, steam-water tests in a heated annulus, fast variations in input power, inlet enthalpy and inlet flow were performed, while the dynamic behavior of the disturbance waves were visually observed near the test section outlet. Long suppression (delay) of disturbance waves could be observed under specific transients, associated with large wall temperature variations corresponding to the complete dryout of the base film in between disturbance waves.

The impurity concentration model will now be described using the concept of impurity mass conservation in all fields. The steam is created through an evaporation process and is not considered to transport any impurity.

An example of impurity concentration calculation is provided, applicable to the three-field approach

$$\text{Film:} \quad \frac{\partial}{\partial t}\left(C_f\,\frac{w_f}{u_f}\right) + \frac{\partial}{\partial z}\left(C_f \cdot W_f\right) = \Pi \cdot \left(C_d \cdot D - C_f \cdot E\right) + C_f^{CF}\,w_f^{CF}$$

$$\text{Drop:} \quad \frac{\partial}{\partial t}\left(C_d\,\frac{w_d}{u_d}\right) + \frac{\partial}{\partial z}\left(C_d \cdot W_d\right) = -\Pi \cdot \left(C_d \cdot D - C_f \cdot E\right) + C_d^{CF}\,w_d^{CF}$$

Steam: No impurities considered.

In the equations above C stands for impurity concentration, superscript CF stands for cross-flow between sub-channels, and subscript f and d stand for film and drop, respectively.

The same concept applies to the four-field approach where the impurity concentration is written consistently with the mass conservation, including the mass exchange between the considered fields.

In a second step, the local, instantaneous, concentration in the base film between waves is calculated by using input parameters ($\Delta t$, $\delta_0$, $C_0$) from the four-field approach. In figures 5 and 6 the base film thickness, and the base film concentration are illustrated, respectively.

Figure 5 shows how the base film thickness varies over time at a specified location in between disturbance waves. At t=0 (immediately after a wave), the base film thickness has its maximum value $\delta_0$ and at t=$\Delta t$ (corresponding to the wave period) the thickness is at its minimum, $\delta_{Min}$. The line defining the base film thickness variation is mainly governed by the evaporation process.

$\delta$: Instantaneous base film thickness
$\Delta t$: Wave period

Subscripts: 0: Initial; LIM: Limit of impurity precipitation

Figure 6 shows how the base film concentration varies over time. At t=0, the concentration is at its minimum $C_0$ and at t=$\Delta t$ at its hypothetical maximum $C_{Max}$ (when precipitation is disregarded), mainly governed by the base film thinning. A concentration limit value $C_{Lim}$ is determined to a value where crud deposition starts.

To determine the crud deposition limit value $C_{Lim}$, plant-specific information is required. According to one example $C_{Inlet}$=15.6 ppb, and $C_{LIM}$=10*$C_{Inlet}$.

Solubility limits are used as thresholds to translate local concentrations in fuel rod coolant film into a crud deposition mass flux. The crud depositions may thereby be modelled as a simple threshold phenomenon. Using a sub-channel analysis approach, the new modelling capability can accurately predict the relative levels of local film concentration and crud deposition mass flux axially and azimuthally on the different rods, without significantly relying on modelling assumptions.

The model has been validated against inspection data from an operating BWR.

The key parameters affecting the margin to crud deposition are:

Local heat flux; local wave frequency; local base film thickness, and constituents' bulk concentration. The first three parameters can be controlled by optimizing nuclear design, i.e. by optimizing the axial enrichment variation in the rods predicted to be most susceptible to crud.

The present invention is not limited to the above-described preferred embodiments. Various alternatives, modifications and equivalents may be used. Therefore, the above embodiments should not be taken as limiting the scope of the invention, which is defined by the appending claims.

**Claims**

1. A method of providing nuclear fuel pellets for a fuel assembly of a Boiling Water Reactor, BWR, comprising a method of determining $^{235}$U enrichment levels of the fuel pellets wherein the enrichment levels are determined in dependence of the result of simulations performed by a computer-implemented simulation method such that crud deposition does not occur under pre-determined boundary conditions, the computer-implemented simulation method being a computer-implemented simulation method of predicting local concentrations of constituents in coolant water anywhere along fuel rods within any fuel assembly mechanical design of a BWR potentially resulting in crud deposits on said fuel rods, the method is based on a sub-channel approach of predicting local mass fluxes of vapour and liquid in coolant water anywhere along fuel rods within any fuel assembly mechanical design of a BWR for given steady-state or transient boundary conditions, the sub-channel approach is based on the solution of mass, momentum and energy conservation equations for the vapour phase and the liquid phase, the liquid phase is represented by more than one field variable, and is specifically represented by three fields, with the vapour phase as a fourth field, consisting of droplets, a liquid base film, and disturbance waves, wherein the method comprises solving individual mass, momentum and energy conservation equations, for said four fields, and solving the necessary closure relations describing the transfer of mass between the said fields, completed by mass conservation equations for constituents dissolved in the liquid phase and transported by each of the said fields individually, and wherein the method comprises:

   - simulating steady-state or transient boundary conditions, including inlet coolant water flow into said sub-channels, the coolant water flow may have a predetermined flow velocity variation,
   - analysing predefined parameters of said disturbance waves and base film, including wave velocity, wave frequency and base film thickness, and
   - analysing liquid base film thickness between consecutive passing disturbance waves, to calculate local instantaneous impurity concentrations based on said simulated boundary conditions, the calculation is made for each fuel rod of the fuel assembly, wherein, for each fuel rod, the method further comprises comparing said calculated local instantaneous impurity concentration to a crud compound precipitation limit, and during the time said concentration is higher than said precipitation limit, crud is considered to have occurred, wherein the method further comprising simulating local concentration of crud constituents when varying enrichment of one or many fuel pellets of one or many fuel rods in order to reduce crud.

2. The method according to claim 1, wherein said step of analysing predefined parameters of disturbance waves and said liquid base film includes resolving a disturbance wave momentum balance and a liquid base film momentum balance, and simplifying the calculations by neglecting momentum exchanges that have limited influence on the results, e.g. from pressure gradient and inertia terms.

3. The method according to claim 1 or 2, further comprising applying a sub-channel disturbance wave model, and configured to, based upon the interaction between the waves and said liquid base film, calculate a detailed distribution of impurity concentrations axially and azimuthally, i.e. along the fuel rod's perimeter within each liquid base film flowing along the fuel rods of the fuel assembly under operating conditions of interest, said operating conditions comprise pressure, flow velocity, power, fuel rod power distribution.

4. The method according to claim 3, further comprising applying an impurity concentration model, which is used as a post-process of said disturbance wave model, and, for each fuel rod, being configured to calculate said local instantaneous impurity concentration within the slowly moving liquid base film in between disturbance waves during imposed operating conditions such as inlet flow velocity variations.

**Patentansprüche**

1. Verfahren zur Bereitstellung von Kernbrennstoffpellets für eine Brennstoffkassette eines Siedewasserreaktors, SWR, umfassend ein Verfahren zur Bestimmung von U-235-Anreicherungsniveaus der Brennstoffpellets, wobei die Anreicherungsniveaus in Abhängigkeit von dem Ergebnis von Simulationen, durchgeführt durch ein computerimplementiertes Simulationsverfahren, derart bestimmt werden, dass unter vorbestimmten Randbedingungen keine Fremdstoffablagerung auftritt, wobei das computerimplementierte Simulationsverfahren ein computerimplementiertes Simulationsverfahren zur Vorhersage von lokalen Konzentrationen von Bestandteilen in Kühlwasser irgendwo entlang Brennstäben innerhalb irgendeiner mechanischen Bauform einer Brennstoffkassette eines SWR ist, die potenziell zu Fremdstoffablagerungen auf den Brennstäben führen, das Verfahren auf einem Unterkanalansatz der Vorhersage von lokalen Massenströmen von Dampf und Flüssigkeit in Kühlwasser irgendwo entlang Brennstäben innerhalb irgendeiner mechanischen Bauform einer Brennstoffkassette eines SWR für gegebene Dauerzustands- oder Übergangsrandbedingungen basiert, der Unterkanalansatz auf der Lösung von Massen-, Impuls- und Energieerhaltungsgleichungen für die Dampfphase und die Flüssigphase basiert, die Flüssigphase durch mehr als eine Feldvariable dargestellt wird, und im Einzelnen durch drei Felder dargestellt wird, mit der Dampfphase als einem vierten Feld, bestehend aus Tröpfchen, einem flüssigen Basisfilm und Störwellen, wobei das Verfahren das Lösen von individuellen Massen-, Impuls- und Energieerhaltungsgleichungen für die vier Felder und das Lösen der notwendigen Abgeschlossenheitsrelationen, die den Massentransfer zwischen den Feldern beschreiben, umfasst, abgeschlossen durch Massenerhaltungsgleichungen für Bestandteile, die in der Flüssigphase gelöst sind und durch jedes der Felder individuell transportiert werden, und wobei das Verfahren Folgendes umfasst:

- Simulieren von Dauerzustands- oder Übergangsrandbedingungen, einschließlich des in die Unterkanäle einströmenden Kühlwassers, wobei der Kühlwasserstrom eine vorbestimmte Schwankung der Strömungsgeschwindigkeit aufweisen kann,
- Analysieren von vordefinierten Parametern der Störwellen und des Basisfilms, einschließlich Wellengeschwindigkeit, Wellenfrequenz und Basisfilmdicke, und
- Analysieren der Dicke des flüssigen Basisfilms zwischen aufeinander folgenden durchlaufenden Störwellen, um auf Grundlage der simulierten Randbedingungen lokale momentane Verunreinigungskonzentrationen zu berechnen, wobei die Berechnung für jeden Brennstab der Brennstoffkassette erfolgt, wobei für jeden Brennstab das Verfahren ferner das Vergleichen der berechneten lokalen momentanen Verunreinigungskonzentration mit einem Fällungsgrenzwert für Fremdstoffverbindungen umfasst und während der Zeit, zu der die Konzentration höher als der Fällungsgrenzwert ist, davon ausgegangen wird, dass Fremdstoff entstanden ist, wobei das Verfahren ferner das Simulieren der lokalen Konzentration von Fremdstoffbestandteilen umfasst, wenn die Anreicherung eines oder vieler Brennstoffpellets eines oder vieler Brennstabes/Brennstäbe variiert wird, um Fremdstoff zu reduzieren.

**2.** Verfahren nach Anspruch 1, wobei der Schritt des Analysierens von vordefinierten Parametern von Störwellen und des flüssigen Basisfilms aufweist: Auflösen eines Störwellenimpulsausgleiches und eines Impulsausgleiches des flüssigen Basisfilms und Vereinfachen der Berechnungen durch Vernachlässigen von Impulsaustauschen, die einen begrenzten Einfluss auf die Ergebnisse haben, z. B. aus Druckgradient und Trägheitstermen.

**3.** Verfahren nach Anspruch 1 oder 2, ferner umfassend das Anwenden eines Unterkanal-Störwellenmodells und dazu ausgestaltet, auf Grundlage der Wechselwirkung zwischen den Wellen und dem flüssigen Basisfilm eine detaillierte Verteilung von Verunreinigungskonzentrationen axial und scheitelwinklig zu berechnen, d. h., entlang dem Brennstabumfang innerhalb jedes flüssigen Basisfilms, der entlang den Brennstäben der Brennstoffkassette unter Betriebsbedingungen von Interesse strömt, wobei die Betriebsbedingungen Druck, Strömungsgeschwindigkeit, Leistung, Brennstableistungsverteilung umfassen.

**4.** Verfahren nach Anspruch 3, ferner umfassend das Anwenden eines Verunreinigungskonzentrationsmodells, das als Post-Prozess des Störwellenmodells verwendet wird, und, für jeden Brennstab, dazu ausgestaltet, die lokale momentane Verunreinigungskonzentration innerhalb des sich langsam bewegenden flüssigen Basisfilms zwischen Störwellen während auferlegter Betriebsbedingungen, wie beispielsweise Schwankungen der Einströmungsgeschwindigkeit, zu berechnen.

**Revendications**

**1.** Procédé de fourniture de pastilles de combustible nucléaire pour un assemblage combustible d'un réacteur à eau bouillante, REB, comprenant un procédé de détermination de niveaux d'enrichissement $^{235}$U des pastilles de combustible dans lequel les niveaux d'enrichissement sont déterminés en fonction du résultat de simulations réalisées par un procédé de simulation mis en œuvre par ordinateur de telle sorte que le dépôt de résidus ne se produise pas dans des conditions limites prédéterminées, le procédé de simulation mis en œuvre par ordinateur étant un procédé de simulation mis en œuvre par ordinateur pour prédire des concentrations locales de constituants dans de l'eau de refroidissement n'importe où le long des barres de combustible au sein d'une conception mécanique d'assemblage de combustibles d'un REB ayant potentiellement pour résultat des dépôts de résidus sur lesdites barres de combustible, le procédé est basé sur une approche à sous-canal consistant à prédire des flux de masse locaux de vapeur et de liquide dans de l'eau de refroidissement n'importe où le long des barres de combustible au sein d'une quelconque conception mécanique d'assemblage de combustibles d'un REB pour des conditions limites données d'états stable ou transitoire, l'approche à sous-canal est basée sur la solution des équations de conservation de masse, de quantité de mouvement et d'énergie pour la phase vapeur et la phase liquide, la phase liquide est représentée par plus d'une variable de champ, et est représentée spécifiquement par trois champs, avec la phase vapeur comme quatrième champ, constituée de gouttelettes, d'un film de base liquide et d'ondes perturbatrices, dans lequel le procédé comprend la résolution d'équations individuelles de conservation de masse, de quantité de mouvement et d'énergie, pour lesdits quatre champs, et la résolution des relations de fermeture nécessaires décrivant le transfert de masse entre lesdits champs, complétée par des équations de conservation de masse pour les constituants dissous dans la phase liquide et transportés par chacun desdits champs individuellement, et dans lequel le procédé comprend :

- la simulation de conditions limites d'états stable ou transitoire, y compris l'écoulement d'eau de refroidissement d'entrée dans lesdits sous-canaux, l'écoulement d'eau de refroidissement peut avoir une variation de vitesse d'écoulement prédéterminée,
- l'analyse de paramètres prédéfinis desdites ondes perturbatrices et dudit film de base, y compris la vitesse d'onde, la fréquence d'onde et l'épaisseur de film de base, et
- l'analyse de l'épaisseur de film de base liquide entre des ondes perturbatrices consécutives, pour calculer des concentrations d'impuretés locales instantanées sur la base desdites conditions limites simulées, le calcul est effectué pour chaque barre de combustible de l'assemblage de combustibles, dans lequel, pour chaque barre de combustible, le procédé comprend en outre la comparaison de ladite concentration d'impuretés locale instantanée calculée à un seuil de précipitation de composé résiduel, et pendant le temps où ladite concentration est supérieure audit seuil de précipitation, le résidu est considéré comme étant apparu, dans lequel le procédé comprend en outre la simulation d'une concentration locale de constituants de résidus lors de la variation de l'enrichissement d'une ou de plusieurs pastilles de combustible d'une ou de plusieurs barres de combustible afin de réduire les résidus.

2. Procédé selon la revendication 1, dans lequel ladite étape d'analyse de paramètres prédéfinis d'ondes perturbatrices et dudit film de base liquide comporte la résolution d'une balance des quantités de mouvement d'ondes perturbatrices et d'une balance de quantités de mouvement de film de base liquide, et la simplification des calculs en négligeant les échanges de quantités de mouvement qui ont une influence restreinte sur les résultats, par exemple à partir des termes de gradient de pression et d'inertie.

3. Procédé selon la revendication 1 ou 2, comprenant en outre l'application d'un modèle d'onde perturbatrice de sous-canal, et configuré pour, sur la base de l'interaction entre les ondes et ledit film de base liquide, calculer une répartition détaillée des concentrations d'impuretés axialement et azimutalement, c'est-à-dire le long du périmètre de la barre de combustible au sein de chaque film de base liquide s'écoulant le long des barres de combustible de l'assemblage de combustibles dans des conditions de fonctionnement considérées, lesdites conditions de fonctionnement comprennent pression, vitesse d'écoulement, puissance, répartition de puissance de barres de combustible,

4. Procédé selon la revendication 3, comprenant en outre l'application d'un modèle de concentration d'impuretés, qui est utilisé en tant que post-traitement dudit modèle d'onde perturbatrice, et, pour chaque barre de combustible, étant configuré pour calculer ladite concentration d'impuretés locale instantanée au sein du film de base liquide qui se déplacent lentement entre les ondes perturbatrices pendant des conditions de fonctionnement imposées, telles que des variations de vitesse d'écoulement d'entrée.

FIG. 1

FIG. 2

FIG. 3

FIG. 4

FIG. 5

FIG. 6

SIMULATING STEADY-STATE OR TRANSIENT
BOUNDARY CONDITIONS, SUCH AS INLET
COOLANT WATER FLOW INTO SUB-CHANNELS

SOLVING INDIVIDUAL MASS, MOMENTUM AND
ENERGY CONSERVATION EQUATIONS FOR FOUR
FIELDS (VAPOUR, DROPLETS, DISTURBANCE
WAVES, AND LIQUID BASE FILM), AND
SOLVING NECESSARY CLOSURE RELATIONS
DESCRIBING TRANSFER OF MASS BETWEEN SAID
FIELDS, COMPLETED BY MODELS DESCRIBING
LOCAL PHENOMENA

ANALYSING PREDEFINED PARAMETERS OF
DISTURBANCE WAVES AND LIQUID BASE FILM
INCLUDING WAVE VELOCITY, WAVE FREQUENCY
AND BASE FILM THICKNESS

ANALYSING LIQUID BASE FILM THICKNESS
BETWEEN CONSECUTIVE PASSING DISTURBANCE
WAVES TO CALCULATE FOR EACH ROD LOCAL
INSTANTANEOUS IMPURITY CONCENTRATIONS
BASED ON SIMULATED BOUNDARY CONDITIONS

COMPARING CALCULATED IMPURITY
CONCENTRATION TO CRUD COMPOUND
PRECIPITATION LIMIT AND IF ABOVE LIMIT CRUD
HAS OCCURED

FIG. 7

SIMULATING STEADY-STATE OR TRANSIENT
BOUNDARY CONDITIONS, SUCH AS ANY
POSTULATED SCENARIOS RELEVANT TO BWR
OPERATION

SOLVING INDIVIDUAL MASS, MOMENTUM AND
ENERGY CONSERVATION EQUATIONS FOR FOUR
FIELDS (VAPOUR, DROPLETS, DISTURBANCE
WAVES, AND LIQUID BASE FILM), AND
SOLVING NECESSARY CLOSURE RELATIONS
DESCRIBING TRANSFER OF MASS BETWEEN SAID
FIELDS, COMPLETED BY MODELS DESCRIBING
LOCAL PHENOMENA

ANALYSING PREDEFINED PARAMETERS OF
DISTURBANCE WAVES AND LIQUID BASE FILM,
INCLUDING WAVE VELOCITY AND BASE FILM
THICKNESS

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAXENA ABHISHEK et al.** A study of two-phase annular flow using unsteady numerical computations. *INTERNATIONAL JOURNAL OF MULTIPHASE FLOW*, 08 May 2019, vol. 126, ISSN 0301-9322
- **CARL ADAMSSON et al.** Modeling and validation of a mechanistic tool (MEFISTO) for the prediction of critical power in BWR fuel assemblies. *NUCLEAR ENGINEERING AND DESIGN*, 01 August 2011, vol. 241 (8), ISSN 0029-5493, 2843-2858
- **ADAMSSON, CARL ; LE CORRE, JEAN-MARIE**. Modeling and validation of a mechanistic tool (MEFISTO) for the prediction of critical power in BWR fuel assemblies. *Nuclear Engineering and Design*, 2011, vol. 241 (8), ISSN 0029-5493, 2843-2858
- **WÜRTZ, J.** An experimental and theoretical investigation of annular steam-water flow in tubes and annuli at 30 to 90 bar.. *Denmark. Forskningscenter Risoe. Risoe-R; No. 372*, 1978
- **T. FUKANO ; S. MORI ; T. NAKAGAWA**. Fluctuation characteristics of heating surface temperature near an obstacle in transient boiling two-phase flow in a vertical annular channel. *Nuclear Engineering and Design*, 2003, vol. 219 (2003), 47-60